# EUROPÄISCHE PATENTSCHRIFT

(11) **EP 0 760 761 B1**
(45) Veröffentlichungstag und Bekanntmachung des Hinweises auf die Patenterteilung: **01.12.1999**
(21) Anmeldenummer: 95917971.4
(22) Anmeldetag: 27.04.1995
(51) Int. Cl.: B60S 1/38

(54) **AUSTAUSCHSATZ FÜR EIN WISCHBLATT**
EXCHANGE SET FOR A WIPER BLADE
JEU DE RECHANGE POUR UN BALAI D'ESSUIE-GLACE

(30) Priorität: 20.05.1994 DE 4417713
(43) Veröffentlichungstag der Anmeldung: 12.03.1997
(73) Patentinhaber: ITT Automotive Europe GmbH, 60488 Frankfurt (DE)
(72) Erfinder: EGNER-WALTER, Bruno, D-74076 Heilbronn (DE); JAISLE, Klaus, D-74211 Leingarten (DE); NOACK, Klauspeter, D-74182 Obersulm (DE); SCHILL, Eduard, D-75446 Wiernsheim (DE); SCHMID, Eckhardt, D-74336 Brackenheim (DE)
(74) Vertreter: Dreiss, Fuhlendorf, Steimle & Becker
(86) Internationale Anmeldenummer: EP9501596
(87) Internationale Veröffentlichungsnummer: WO9532112

(56) Entgegenhaltungen:
- EP-A- 0 007 017
- WO-A-93/14958
- DE-A- 3 827 875

## Beschreibung

Die Erfindung bezieht sich auf einen Austauschsatz für ein Wischblatt zum Reinigen einer Scheibe, insbesondere an einem Kraftfahrzeug, mit den Merkmalen des Oberbegriffs des Anspruchs 1 oder des Anspruchs 2.

Bei vielen heute üblichen Wischblättern besteht die Wischleiste aus einem Kopfteil und einer Wischlippe; die an dem Kopfteil über einen Kippsteg gehalten ist. Der Kopfteil weist beidseitig jeweils eine Längsnut auf, in die eine Federschiene seitlich eigelegt ist. Diese Federschiene ist durch Halteelemente an der Wischleiste gegen Längsverschiebung gesichert. Als Halteelement dient dabei meistens eine Rippe an der Wischleiste, die in eine korrespondierende Kerbe in der Federschiene seitlich eingreift. Gegen seitliches Herausfallen aus der Längsnut sind die Federschienen durch Krallen gesichert, die zum Wischblattgestell gehören und die Wischleiste aufnehmen.

Da bei einem solchen Wischblattaufbau der Austausch der Wischleiste nur mit Schwierigkeiten durchführbar ist, wurde in der DE-OS 38 27 875 vorgeschlagen, die Ersatzwischleiste bereits mit den erforderlichen Federschienen auszustatten und mit mindestens einer Halteklammer gegen seitliches Herausfallen zu sichern. Diese mindestens eine Halteklammer umgreift dabei den Kopfteil der Wischleiste einschließlich der in den Längsnuten angeordneten Federschienen. Die eine oder mehreren Halteklammern sind dabei mit relativ geringer Klemmkraft an dem Kopfteil der Wischleiste fixiert. Die so gebildete Baueinheit wird in Längsrichtung in die Krallen des Wischblattgestells eingeschoben, wobei die Krallen des Wischblattgestells in die dafür vorgesehenen Führungsnuten in den Seiten des Kopfteiles der Wischleiste eingreifen. Die Halteklammern werden beim Einschieben der Baueinheit von der ersten Kralle des Wischblattgestells zurückgehalten und somit längs der Wischleiste verschoben. Spätestens dann, wenn die Wischleiste ihre Endposition erreicht, fallen die Halteklammern vom Kopfteil der Wischleiste ab. Um die Wischleiste gegen Herausrutschen aus dem Wischblattgestell zu sichern, wird die Wischleiste an dem Ende, welches dem zuerst in die Krallen des Wischblattgestells eingeschobenen Ende gegenüberliegt, an dem Wischblattgestell festgelegt. Dazu werden die Endkrallen des Wischblattgestells nach Überwinden einer Anlaufschräge in eine Aussparung im Bereich der Führungsnut gebracht. Die Endkralle greift also mit geringem Spiel formschlüssig in die Aussparungen ein und sichert so die Wischleiste in Längsrichtung.

Um eine verschlissene Wischleiste aus dem Wischblattgestell zu entfernen, ist es erforderlich, die in die Aussparungen eingreifende Endkralle um einen bestimmten Betrag aufzuweiten. Um dann bei einer neueingesetzten Wischleiste das ordnungsgemäße Eingreifen dieser Endkralle in die Ausnehmungen sicherzustellen, ist wiederum ein entsprechendes Zusammendrücken dieser Endkralle erforderlich. Derartige bleibende Verformungen sind nicht beliebig oft wiederholbar, ohne dabei eine Beschädigung herbeizuführen, insbesondere ist eine Beschädigung des Farbüberzuges in diesem Bereich nicht zu vermeiden. Außerdem hat sich gezeigt, daß bei Verwendung von nur einer Halteklammer nach wie vor Schwierigkeiten derart auftreten, daß aufgrund der Elastizität von Wischleisten und Federschienen an von der Halteklammer entfernten Stellen nach wie vor die Federschienen aus ihren Längsnuten heraustreten können.

Die DE-A-38 27 875 offenbart ein Endstück, welches einen, dem freien Querschnitt der Endkralle des Wischblattgestells angepaßten Querschnitt aufweist, der es ermöglicht, daß die Endkralle vollständig über dieses Endstück hinweggeführt werden kann.

Aus der WO-A-93/14958 ist ein Wischblatt bekannt, dessen Wischblattgestell mit Krallenpaaren eine elastische Wischleiste trägt, in deren Kopfteil ein Paar Federschienen in längsseitige Nuten eingelegt ist. Ein einziges Endstück ist als Sicherungselement unter Klemmung auf ein Ende der Wisch-leiste aufgeschoben, wobei auch die diesseitigen Enden der Federschienen von dem Endstück umgriffen und in ihren Nuten gehalten werden. Zwei parallele seitliche Arme des End-stückes, die aus einem nachgiebigen Kunststoff bestehen, queren in Längsrichtung des Wischblattes das äußere Krallenpaar und hintergreifen mit jeweils einem einwärts gerichteten Ansatz das Krallenpaar. Die einwärts gerichteten, Ansätze sind mit Rast- und Gegenrastmitteln ausgestattet, um durch gegenseitiges Einknöpfen hinter dem Krallenpaar miteinander verbunden zu werden.

Unabhängig davon, daß ein solches Endstück allein nicht geeignet ist, mit einer mit Federschienen bestückten elastischen Wischleiste einen Austauschsatz im Sinne der Erfindung zu bilden, ist die Handhabung des Endstückes bei seiner Montage oder Demontage äußerst umständlich.

Aufgabe der Erfindung ist es nunmehr, einen Austauschsatz für ein Wischblatt der eingangs genannten Art derart weiterzubilden, daß eine einfache und sichere Handhabung des Austauschsatzes gewährleistet ist und Beschädigungen weitgehend vermieden werden.

Erfindungsgemäß wird diese Aufgabe durch einen Austauschsatz mit den Merkmalen des Oberbegriffs des Anspruchs 1 gelöst, wobei auf einem Ende der Wischleiste ein Endstück befestigt ist, welches an diesem Ende die Federschienen in den Längsnuten hält, und wobei eine Halteklammer in einem Abstand von dem Endstück, vorzugsweise jedoch nahe dem anderen Ende der Wischleiste, mit leichtem Preßsitz den Kopfteil der Wischleiste einschließlich Federschienen umgreifend auf die Wischleiste aufgesetzt ist. Damit liegt eine vormontierte Baugruppe vor, bei welcher die Federschienen an zwei verschiedenen Punkten in den Längsnuten des Wischblattes gehalten werden. Erfahrungsgemäß ist die Gefahr, daß die Federschienen aus den Längsnuten der Wischleiste während des Montagevorganges herausrutschen können, an den Enden der Wischleiste besonders groß, insbesondere dann, wenn die Federschienen zur Erzeugung einer Vorspannung der Wischleiste gewölbt ausgebildet sind. Durch das Endstück wird diese Gefahr an diesem Ende der Wischleiste beseitigt. Ein weiterer Vorteil resultiert daraus, daß das Endstück auch nach der Montage auf dem Ende der Wischleiste verbleibt und entweder allein oder in Verbindung mit einem weiteren Bauteil die Wischleiste in Längsrichtung am Wischblattgestell sichert. Eine Verformung der Kralle zum Festlegen dieses Endes der Wischleiste am Wischblattgestell sowie bei allen weiteren Austauschvorgängen ist nicht mehr erforderlich.

Die Handhabung dieser vorgefertigten Baugruppe, bestehend aus Wischleiste mit eingelegten Federschienen sowie Endstück und zusätzlicher Halteklammer, gestaltet sich recht einfach. Das dem aufgesetzten Endstück gegenüberliegende Ende der Wischleiste wird lagerrichtig so an der ersten Kralle des Wischblattgestells angesetzt, daß die Kralle beidseitig in die Führungsnuten am Kopfteil der Wischleiste eingreift, und damit den oberen Teil des Kopfteiles einschließlich der Federschienen in sich aufnimmt. Bei weiterem Einschieben der Wischleiste in Längsrichtung kommt dann die Halteklammer an der ersten Kralle des Wischblattgestells zur Anlage. Von da an gleitet die auf Grund des nur leichten Preßsitzes leicht verschiebbare Halteklammer relativ in Längsrichtung der Wischleiste. Die Wischleiste wird beim Montagevorgang nacheinander in die übrigen Krallen des Wischblattgestells eingeführt. Spätestens kurz bevor das Endstück die erste Kralle des Wischblattgestells erreicht, muß die Halteklammer vom Wischblatt entfernt werden. Nachfolgend wird die Wischleiste vollständig in das Wischblattgestell eingeschoben und in Längsrichtung an diesem gesichert.

Vorteilhaft ist die Halteklammer ähnlich einer Wäscheklammer ausgebildet, wobei ihre zwei Schenkel durch einen Steg miteinander verbunden sind. An einem Ende sind die Schenkel derart als Haltesteg nach innen umgebogen bzw. abgewinkelt, daß sie den Kopfteil der Wischleiste untergreifen können. Außerdem entspricht der Raum, der von den beiden Schenkein, dem Steg und den beiden Haltestegen abgegrenzt wird, annähernd dem Querschnitt des Kopfteiles der Wischleiste. Dadurch werden die Federschienen mit größter Sicherheit in ihren Längsnuten gehalten. Zum Entfernen einer solchen Halteklammer von der Wischleiste drückt man die beiden Schenkel an ihren freien Enden gegeneinander, wodurch die den Kopfteil der Wischleiste umfassenden Schenkelteile aufgespreizt werden, bis diese den Kopfteil der Wischleiste freigeben. Wenn die Halteklammer in kostengünstigerweise einstückig hergestellt ist, kann es vorkommen, daß der Steg beim Aufspreizen der Schenkelenden zu Bruch geht. Um dem vorzubeugen und die Halteklammer wiederverwendbar zu machen, kann der Steg zwischen den Schenkeln der Halteklammer elastisch federnd ausgebildet werden.

Trotz aller Vorteile können beim Einführen der Wischleiste in die Krallen des Wischblattgestells immer noch gewisse Schwierigkeiten auftreten. Da die Krallen relativ eng bemessen sind, kann sich die weiche Stirnseite der Wischleiste an den Kanten der Kralle verhaken wodurch das Einführen behindert wird. Um diese Schwierigkeiten zu beseitigen, wird eine Ausführung empfohlen, bei welcher das einzuführende Ende der Wischleiste im wesentlichen stirnseitig mit einem Einführungsstück bestückt ist. Dieses Einführungsstück ist so gestaltet, daß es das für die Einführung der Wischleiste in die Krallen des Wischblattgestells maßgebliche Profil der Wischleiste beinhaltet, wobei dieses sich zum freien Ende des Einführungsstücks verjüngt. Dabei ist das Einführungsstück vorteilhafterweise so an dem Ende der Wischleiste befestigt, daß es von dort wieder zerstörungsfrei entfernbar ist. Damit wird die Möglichkeit der Mehrfachverwendung dieses Einführungsstücks geschaffen.

Für eine einfache Handhabung des Austauschsatzes ist es vorteilhaft, wenn das auf dem Ende der Wischleiste anzuordnende Endstück aus nur einem Teil besteht.

Dementsprechend ist eine Ausgestaltung dieses Endstücks gemäß Anspruch 9 zu empfehlen. Hierbei besteht das Endstück aus einem hohlkörperartigen Gehäuse, welches an einem Ende offen und am anderen Ende durch eine Rückwand verschlossen ist. Der freie Querschnitt dieses Gehäuses ist so gestaltet, daß das Gehäuse am Ende der Wischleiste deren Kopfteil einschließlich Federschienen so aufnehmen kann, daß an diesem Ende der Wischleiste die Federschienen in den seitlichen Längsnuten gehalten werden. Damit dieses Endstück am Ende der Wischleiste nur auf deren Kopfteil aufgesteckt ist, besitzt das Gehäuse an seiner Unterseite einen Schlitz, der den Kippsteg der Wischleiste aufnehmen kann. Der Kippsteg durchgreift also die Unterseite des Endstückes, so daß die Wischlippe frei herausragen kann. Um das Endstück am Ende der Wischleiste arretieren zu können, ist es mit dafür vorgesehenen Mitteln, beispielsweise mit Rast- oder Klemmelementen, ausgestattet, die sich insbesondere an den Innenseiten der gegenüberliegenden Seitenwände des Gehäuses befinden. Diese Klemm- oder Rastelemente gewährleisten einen ausreichend festen Sitz des Endstückes auf dem Ende der Wischleiste. Sie können auch dazu dienen, die Federschienen in Längsrichtung an der Wischleiste zu fixieren. Ein sogestaltetes Endstück ist zum einen gut geeignet zum manuellen Aufnehmen, Anfassen sowie Handhaben des vormontierten Austauschsatzes beim Bestücken des Wischblattgestells und stellt zum anderen einen ordentlichen und visuell annehmbaren Abschluß des Endes der Wischleiste dar.

Es ist zu empfehlen, in die Unterseite des Gehäuses des Endstücks unmittelbar an der Stirnwand des geschlossenen Endes eine zusätzliche Öffnung einzubringen, in welche vorzugsweise der Schlitz für die Aufnahme des Kippsteges der Wischleiste einmündet. Diese Öffnung ermöglicht einerseits den Ablauf von Flüssigkeit aus dem Inneren des Endstückes und erweist sich andererseits als Vorteil bei einer eventuell erforderlichen Demontage des Endstückes vom Wischleistenende. Bei letzterem dient diese Öffnung als Montageöffnung und ermöglicht den Eingriff mit einem Werkzeug, beispielsweise einem Schraubendreher, um das Endstück vom Ende der Wischleiste abzudrücken.

Bei Wischblättern mit verhältnismäßig langer Wischleiste und/oder für stark gekrümmte Scheiben muß, wie dem Fachmann bekannt ist, eine relativ große Verschiebbarkeit der Wischleiste gegenüber dem Wischblattgestell gewährleistet sein. Das ist erforderlich, weil die elastische Wischleiste, die praxisüblich aus Gummi bzw. einem Elastomer besteht, durch unterschiedlich große Temperaturausdehnung, bzw. wegen ihrer Durchbiegung auf einer stark gekrümmten Scheibe mit Bezug auf das Wischblattgestell eine Längenänderung erfährt. In solch einem Fall hat es sich bereits als günstig erwiesen, nur eines der beiden Enden der Wischleiste an einer Endkralle des Wischblattgestells so festzulegen, daß es in beiden Längsrichtungen gesichert ist. Auf diese Weise ist eine Verschiebbarkeit der Wischleiste in Bezug auf alle übrigen Krallen des Wischblattgestells gewährleistet.
Um diese Forderung bei einem Endstück gemäß der vorliegenden Erfindung verwirklichen zu können, ist erfindungsgemäß das Endstück mit zwei Rastfedern ausgestattet, die sich von den gegenüberliegenden Seitenwänden des Gehäuses über dessen offenes Ende hinaus in Längsrichtung der Wischleiste erstrecken. Diese beiden voneinander beabstandeten Rastfedern besitzen an ihren freien Enden Rastnasen, welche nach einwärts gerichtet sind. Diese Rastfedern sind so lang, daß sie in montiertem Zustand der Wischleiste die betreffende Endkralle des Wischblattgestells an deren Außenseite umgreifen, und mit ihren Rastnasen hinterrasten. Ein solches Endstück ist relativ preisgünstig als einstückiges Kunststoffteil herstellbar.

Für andere Wischblätter mit relativ kurzer Wischleiste oder für im wesentlichen ebene Scheiben kann es vorteilhaft sein, die Wischleiste nicht unmittelbar am Wischblattgestellt zu arretieren, sondern insgesamt ein gewisses Längsspiel zwischen Wischleiste und Wischblattgestell zuzulasen. Hierfür ist ein Austauschsatz gemäß Anspruch 2 zu empfehlen. In diesem Fall ist die Wischleiste an ihrem Ende mit einem Endstück ausgestattet, welches keine Rastfedern für die Endkralle des Wischblattgestells besitzt. Dieses Endstück ist ausschließlich am Ende der mit Federschienen bestückten Wischleiste gehalten. Das andere Ende der Wischleiste, welches in die Krallen des Wischblattgestells einzuführen ist, kann mit einem bereits beschriebenen wiederentfernbaren Einführungsstück versehen sein. Nahe diesem vorderen in das Wischblattgestell einzuführenden Ende der Wischleiste ist eine Halteklammer, den Kopfteil und die Federschiene umfassend, auf die Wischleiste aufgesetzt. Zu dem Austauschsatz gehört außerdem ein weiteres lose beigefügtes Endstück, welches mit dem auf der Wischleiste angeordneten Endstück identisch ist. Nach dem vollständigen Einschieben der Wischleiste in das Wischblattgestell wird, wenn vorhanden, von dem eingeführten Ende der Wischleiste, welches nunmehr am anderen Ende des Wischblattgestells herausragt, daß Einführungsstück entfernt. Auf dieses Ende der Wischleiste wird nun das zweite, lose beigefügte Endstück, aufgesteckt, wobei es ausschließlich an der Wischleiste arretiert wird. Die Länge der Wischleiste ist dem Typ des Wischblatts entsprechend so gewählt worden, daß zwischen den Endstücken und den zugehörigen Endkrallen des Wischblattgestells das erforderliche Längsspiel gewährleistet ist. Jedes der beiden auf der Wischleiste arretierten Endstücke begrenzt somit die Längsverschiebung der Wischleiste in einer Richtung.

Um beim Betreiben der Scheibenwischeranlage den Anschlag der Endstücke an der betreffenden Endkralle des Wischblattgestells zu dämpfen und damit gleichzeitig die Geräuschentwicklung zu mindern, wird empfohlen, beide Endstücke mit einem entsprechenden Dämpfungsglied, welches mit der benachbarten Endkralle des Wischblattgestells zusammenwirken kann, auszustatten. Dabei ist das Dämpfungsglied vorteilhaft als Federzunge ausgebildet, die insbesondere die Form eines in sich geschlossenen Hohlprofils aufweist. Diese Federzunge ist vorteilhaft einstückig, insbesondere stirnseitig, am offenen Ende des Gehäuses an das Endstück angeformt.

Für eine weitere Vereinfachung in der Handhabung des Austauschsatzes wird eine vorteilhafte Ausgestaltung vorgeschlagen, wonach einzelne Teile des Austauschsatzes entsprechend ihrer Bedeutung eine unterschiedliche Farbgebung erhalten. Solche Teile, die nach der Montage am Wischblatt verbleiben sollen, werden in der gleichen Farbe wie die Wischleiste oder das Wischblattgestell ausgeführt, und solche Teile, die während oder nach der Montage der Wischleiste zu entfernen sind, werden in einer Kontrast- bzw. Signalfarbe zur Wischleiste bzw. zum Wischblattgestell ausgeführt. Durch diese Maßnahme soll insbesondere eine unsachgemäße Montage der Wischleiste am Wischblattgestell vermieden werden.

Nachfolgend wird die Erfindung an Ausführungsbeispielen näher beschrieben. In den zugehörigen Zeichnungen zeigen
- Figur 1: einen Austauschsatz, bereit zum Einschieben in die Krallen eines Wischblattgestells,
- Figur 2: den Austauschsatz während des Einschiebens in die Krallen eines Wischblattgestells,
- Figur 3: einen Querschnitt durch den Austauschsatz im Bereich der Halteklammer,
- Figur 4: ein Endstück eines Austauschsatzes, mit im Vergleich mit Figur 1 nach oben gekehrter Unterseite,
- Figur 5: ein Einführungsstück eines Austauschsatzes gemäß Figur 1,
- Figur 6: ein anderes Ausführungsbeispiel eines Austauschsatzes beim Einschieben in das Wischblattgestell und
- Figur 7: den Austauschsatz aus Figur 6 nach der Montage am Wischblattgestell.

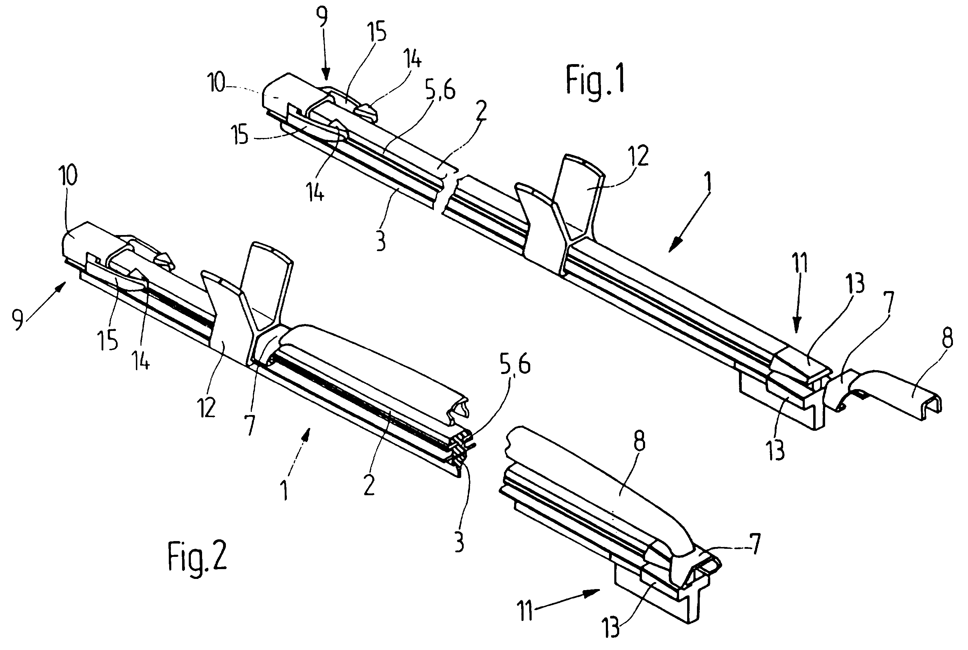

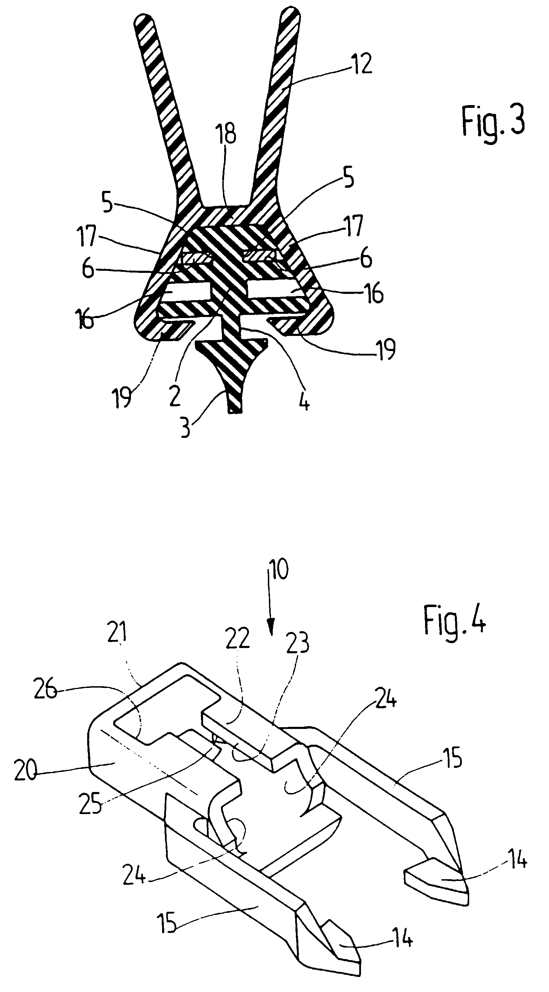

Der in Figur 1 gezeigte Austauschsatz weist eine langgestreckte Wischleiste 1 aus Gummi auf, die einen Kopfteil 2 und eine Wischlippe 3 besitzt, wobei Kopfteil 2 und Wischlippe 3 über einen Kippsteg 4 einstückig miteinander verbunden sind (Fig. 3). In den Kopfteil 2 sind zwei seitliche Längsnuten 5 eingearbeitet, in welche jeweils eine Federschiene 6 eingelegt ist. Damit die Federschienen 6 beim Einschieben des Austauschsatzes in die Krallen 7 eines nur angedeuteten Wischblattgestells 8 nicht seitlich aus den Längsnuten 5 herausgleiten können, sind sie an dem Ende 9 durch ein Endstück 10 an der Wischleiste 1 gehalten. Das Endstück 10 ist so ausgebildet, daß es von der Stirnseite der Wischleiste 1 her auf deren Ende 9 aufgeschoben ist und dabei den Kopfteil 2 einschließlich Federschienen 6 umschließt. Zwischen dem Endstück 10 und dem vorderen Ende 11 der Wischleiste 1 ist eine Halteklammer 12 mit leichtem Preßsitz auf den Kopfteil 2 geklemmt. Dabei sollte die Halteklammer 12 zwischen dem vorderen Ende 11 und der Mitte der Wischleiste 1 angeordnet sein, was wegen der gebrochenen Darstellung der Wischleiste aus der Figur 1 nicht klar ersichtlich ist. Die Halteklammer 12 umfaßt den Kopfteil 2 der Wischleiste 1 von oben und übergreift dabei auch beide in den Längsnuten 5 befindlichen Federschienen 6 und sichert diese gegen ungewolltes seitliches Herausgleiten aus den Längsnuten 5.

Vervollständigt wird der Austauschsatz durch ein Einführungsstrück 13, welches im wesentlichen stirnseitig an dem vorderen Ende 11 der Wischleiste 1 angeordnet ist und dem leichteren Einführen der Wischleiste 1 in die Krallen 7 des Wischblattgestells 8 dient.

Der Austauschsatz, der vorteilhafterweise bereits in dem in Figur 1 gezeigten vormontierten Zustand als Baueinheit angeliefert wird, ist mit dem Einführungsstück 13 voran nacheinander längs in die einzelnen Krallen 7 eines Wischblattgestells 8 einzuschieben. Wenn die Halteklammer 12 an die erste Kralle 7 anschlägt, wird sie, wie aus Figur 2 ersichtlich, von dieser Kralle 7 zurückgehalten. Die Anpreßkraft der Halteklammer 12 an den Kopfteil 2 der Wischleiste 1 ist so gering ausgelegt, daß sie relativ leicht längs der Wischleiste 1 verschiebbar ist. Der weitere Einschiebevorgang der Wischleiste 1 wird also nicht behindert. Spätestens kurz bevor das Endstück 10 die Halteklammer 12 erreicht, wird der Einschiebevorgang Unterbrochen und die Halteklammer 12 vom Kopfteil 2 der Wischleiste 1 entfernt. Das erfolgt durch Aufspreizen der Halteklammer 12 und Abziehen nach oben. Nunmehr wird die Wischleiste 1 weiter in das Wischblattgestell 8 eingeschoben, bis die Auflaufschrägen der Rastnasen 14, welche sich an den freien Enden der Rastfedern 15 befinden, auf die Außenseiten der ersten Krallen 7 auflaufen und nach Überwinden der Kralle 7 an deren Rückseite verrasten. Nun ist die Wischleiste 1 mit ihrem Ende 9 an der ersten Kralle 7 des Wischblattgestells 8 festgelegt. In allen anderen Krallen 7 des Wischblattgestells 8 ist die Wischleiste 1 in Längsrichtung verschiebbar gehalten. Um die volle Funktionsfähigkeit des Wischblatts zu gewährleisten, muß noch das Einführungsstück 13 vom vorderen Ende 11 der Wischleiste 1 abgezogen werden. Um die Montagesicherheit des Austauschsatzes zu erhöhen, sind die Halteklammer 12 und das Einführungsstück 13 signalrot gefärbt. Dadurch heben sich diese beiden Teile von der schwarzen Wischleiste 1 und dem schwarzen Endstück 10 deutlich ab, wodurch die Gefahr, daß das Entfernen dieser Teile während der oder im Anschluß an die Montage vergessen wird, verringert wird.

Aus Figur 3 ist ersichtlich, wie die Halteklammer 12 die Federschienen 6 am Kopfteil 2 der Wischleiste 1 hält. Die beiden Federschienen 6 sind in die oberen seitlichen Längsnuten 5 des Kopfteiles 2 eingelegt. Unterhalb dieser Längsnuten 5 sind Führungsnuten 16 in den Kopfteil 2 eingearbeitet, die parallel zu den Längsnuten 5 verlaufen. An die Unterseite des im Querschnitt im wesentlichen trapezförmigen Kopfteiles 2 sind einstückig der Kippsteg 4 und die Wischlippe 3 angeformt. Die wäscheklammerähnliche Halteklammer 12 ist im wesentlichen von zwei Schenkeln 17 gebildet, die zwischen ihren beiden Enden durch einen federelastischen Steg 18 einstückig miteinander verbunden sind. An ihrem unteren Ende sind die Schenkel 17 einwärts umgebogen, so daß sie aufeinander zulaufen und die umgebogenen Enden Haltestege 19 bilden. Der von dem Steg 18, den unteren Teilen der Schenkel 17 und den Haltestegen 19 eingegrenzte Querschnitt entspricht etwa dem Querschnitt des Kopfteiles 2. Die Halteklammer 12 ist von oben auf die mit den Federschienen 6 bestückte Wischleiste 1 aufgesetzt, wobei die Haltestege 19 den Kopfteil 2 untergreifen. Die Halteklammer 12 sitzt im leichten Preßsitz auf dem Kopfteil 2 und hält die Federschienen 6 in den Längsnuten 5. Die Halteklammer 12 sitzt einerseits so fest auf dem Kopfteil 2, daß sie durch leichte Transporterschütterungen nicht verschoben wird, andererseits sitzt sie so locker, daß sie relativ leicht längs der Wischleiste verschiebbar ist. Zum Entfernen der Halteklammer 12 von der Wischleiste 1 werden die Haltestege 19 durch Zusammendrücken der oberen Enden der Schenkel 17 entsprechend weit aufgespreizt.

Das in Figur 4 gezeigte Endstück 10 eines erfindungsgemäßen Austauschsatzes ist einstückig als Kunststoffteil gefertigt, dessen Hauptbestandteil ein hohlkörperartiges Gehäuse 20 ist. Dieses Gehäuse 20 ist an einem Ende offen und am anderen Ende durch eine Rückwand 21 geschlossen. Der freie Querschnitt des Gehäuses 20 ist so gestaltet, daß er den Kopfteil 2 der Wischleiste 1 mit in die Längsnuten 5 eingelegten Federschienen 6 in sich aufnehmen kann und somit die Federschienen 6 am seitlichen Herausgleiten aus den Längsnuten 5 hindert. Die in der Figur 4 obenliegende Unterseite 22 des Gehäuses 20 weist in Längsrichtung einen Schlitz 23 auf, der zumindest geringfügig breiter ist als der Kippsteg 4 der Wischleiste 1. Somit kann das Endstück 10 in Längsrichtung auf das Ende 11 der Wischleiste 1 aufgesteckt werden, so wie es aus Figur 1 ersichtlich ist. Um einen ausreichend festen Sitz des Endstücks 10 auf der Wischleiste 1 zu erreichen, ist das Gehäuse 20 des Endstücks 10 an den gegenüberliegenden Innenseiten 24 mit feststehenden Klemm- oder Rastelementen 25 ausgestattet. Diese Klemm- oder Rastelemente 25, von denen in Figur 4 nur eines sichtbar ist, quetschen sich in den Gummi der Wischleiste 1 ein oder greifen in entsprechende Ausnehmungen am Kopfteil 2 der Wischleiste 1 und eventuell der Federschienen 6 ein.

An der Unterseite 22 des Gehäuses 20 ist zwischen dem Schlitz 23 und der Rückwand 21 eine Öffnung 26 vorhanden, in welche der Schlitz 23 einmündet. Die Õffnung 26 dient insbesondere als Montageöffnung und gestattet den Eingriff eines Werkzeuges als Hilfsmittel für das Entfernen des Endstücks 10 vom Kopfteil 2. Ebensogut kann eingedrungene Flüssigkeit durch diese Öffnung 26 aus dem Gehäuse 20 austreten. Die beiden Rastfedern 15 mit Rastnasen 14 sind seitlich an die gegenüberliegenden Außenseiten des Gehäuses 20 angeformt und erstrecken sich in Längsrichtung über das offene Ende des Gehäuses 20 hinaus. Darüberhinaus eignet sich das Endstück 10 gut zum Anfassen, insbesondere beim Einschieben des Austauschsatzes in das Wischblattgestell 8, wodurch die Wischlippe 3 vor dem Zugriff geschützt ist.

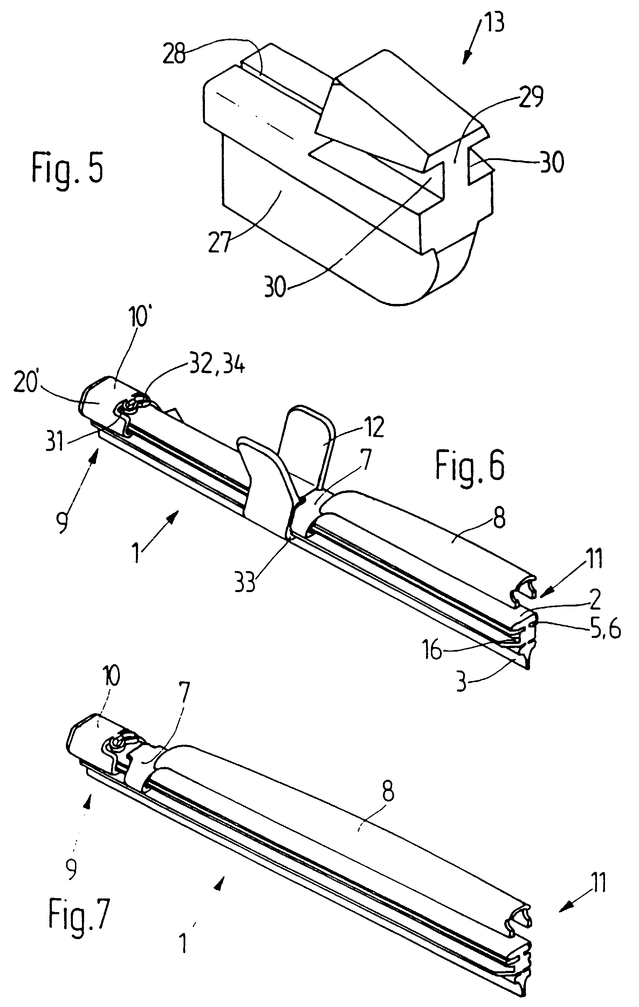

Aus Figur 5 ist eine Ausführung eines Einführungsstücks 13 eines Austauschsatzes ersichtlich. Der untere Teil 27 des Einführungsstücks 13 ist derartig hohl ausgebildet, daß er die Wischlippe 3 am vorderen Ende 11 der Wischleiste 1 aufnehmen kann. Der Kippsteg 4 der Wischleiste 1 durchgreift dann den Längsschlitz 28 des Einführungsstücks 13, wobei der Längsschlitz 28 geringfügig schmaler ist als der Kippsteg 4 und somit am vorderen Ende 11 der Wischleiste zerstörungsfrei lösbar festgeklemmt ist. Das Oberteil 29 des Einführungsstücks 13 schließt sich unmittelbar stirnseitig am vorderen Ende 11 an den Kopfteil 2 der Wischleiste 1 an. Innerhalb dieses Oberteiles 29 verjüngt sich der oberhalb der Führungsnuten 16 liegende Querschnitt des Kopfteiles 2 bei gleichzeitiger Erweiterung der Einführungsnuten 30 für die Krallen 7, welche sich stirnseitig an die Führungsnuten 16 des Kopfteiles anschließen.

In Figur 6 ist ein anderes Beispiel eines erfindungsgemäßen Austauschsatzes in einem Stadium des Einschiebens in das Wischblattgestell 8, welches in Figur 6 nur angedeutet ist, dargestellt. Bei diesem Austauschsatz wurde auf ein Einführungsstück 13 verzichtet - stattdessen ist die Stirnseite am vorderen Ende 11 der Wischleiste 1 seitlich angeschrägt, um das Einführen in die Krallen 7 des Wischblattgestells 8 zu erleichtern. Die Halteklammer 12 ist wie die aus Figur 1 bzw. 3 ausgeführt. Sie hat die gleiche Funktion, ist in gleicher Weise zu handhaben - deshalb braucht an dieser Stelle nicht näher darauf eingegangen werden.

Das in Figur 6 ausschließlich auf dem Ende 9 der mit Federschienen 6 bestückten Wischleiste 1 befestigte Endstück 10' ähnelt dem aus Figur 1 bzw. 4. Es unterscheidet sich dadurch, daß an sein Gehäuse 20' keine Rastfedern 15 angeformt sind. Die Oberseite des Endstückes 10' ist am offenen Ende des Gehäuses 20' von der Stirnseite eingerückt, wodurch eine randoffene Ausnehmung 31 gebildet wird, die von den Seitenwänden des Gehäuses 20' flankiert wird. In dieser Ausnehmung 31 ist ein Dämpfungsglied 32 angeordnet, welches den Anschlag am Wischblattgestell 8 bei Längsverschiebung der montierten Wischleiste 1 im Scheibenwischerbetrieb dämpfen soll. Letzteres geschieht dadurch, daß der von der Kralle 7 des Wischblattgestells längs nach außen abstehende Ansatz 33 in Berührung mit dem Dämpfungsglied 32 gelangt.

In vorteilhafter Weise ist das Dämpfungsglied 32 als Federzunge 34 ausgebildet, die einstückig an das offene Ende des Gehäuses 20' des Endstücks 10' angeformt ist und ein in sich geschlossenes Hohlprofil ist.

Zu diesem Austauschsatz gehört ein zweites identisches Endstück 10', welches der aus Figur 6 ersichtlichen vormontierten Baueinheit lose beigelegt ist. Dieses zweite Endstück 10' wird, wie aus Figur 7 ersichtlich, nach dem Entfernen der Halteklammer 12 und dem vollständigen Einschieben der Wischleiste 1 auf das aus dem Wischblattgestell 8 herausragende vordere Ende 11 der Wischleiste 1 aufgesteckt und damit an diesem befestigt. In Längsrichtung wird damit die Wischleiste 1 durch die beiden Endstücke 10' gesichert, die an der jeweils zugeordneten äußeren Kralle 7 des Wischblattgestells 8 anschlagen können. Die Länge der Wischleiste 1 ist so bemessen, daß zwischen den Endstücken 10' und den äußeren Krallen 7 ein ausreichend großes Spiel vorhanden ist, welches die Längsverschiebung der Wischleiste 1 gegenüber dem Wischblattgestell 8 gewährleistet. Diese Ausführung ist hauptsächlich für relativ kurze Wischblätter von Vorteil. In der Figur 7 ist nur ein Ende des Wischblattes mit dem Ende 9 der Wischleiste 1 im montierten Zustand dargestellt - das andere Ende gleicht dem hier dargestellten Ende.

## Patentansprüche

1. Austauschsatz für ein Wischblatt zum Reinigen einer Scheibe, insbesondere an einem Kraftfahrzeug, mit einer langgestreckten elastischen Ersatz-Wischleiste (1) mit zwei Federschienen (6), die gegenüberliegend jeweils in eine seitliche, in den Kopfteil (2) der Wischleiste (1) eingearbeitete Längsnut (5) eingelegt und von einer, vorzugsweise nahe dem vorderen Ende (11) der Wischleiste (1), mit leichtem Preßsitz den Kopfteil (2) einschließlich Federschienen (6) umgreifenden Halteklammer (12) in den Längsnuten (5) gehalten werden, und mit jeweils einer seitlich in den Kopfteil (2) eingearbeiteten und parallel zur Längsnut (5) verlaufenden Führungsnut (16) zur Aufnahme der Krallen (7) eines Wischblattgestells (8), wobei auf einem Ende (9) der Wischleiste (1) ein Endstück (10) befestigt ist, dessen freier Querschnitt so gestaltet ist, daß es den Kopfteil (2) der Wischleiste (1) einschließlich Federschienen (6) aufnehmen kann, und das an diesem Ende (9) die Federschienen (6) in den Längsnuten (5) hält und im wesentlichen aus einem hohlkörperartigen Gehäuse (20) besteht, das mit Sicherungsmitteln ausgestattet ist, durch welche mittelbar die Wischleiste (1) an dem äußeren Krallenbügel des Wischblattgestells in ihrer Längsrichtung fixierbar ist, dadurch gekennzeichnet, die Sicherungsmittel zwei Rastfedern (15) sind, die sich von den gegenüberliegenden Seitenwänden des Gehäuses (20) über das offene Ende des Gehäuses (20) hinaus in Längsrichtung der Wischleiste (1) erstrecken, wobei sich an den freien Enden der Rastfedern (15) nach einwärts gerichtete Rastnasen (14) befinden, die nach der Montage der Wischleiste (1) am Wischblattgestell (8) die Endkralle (7) an den Außenseiten hintergreifen.

2. Austauschsatz für ein Wischblatt zum Reinigen einer Scheibe, insbesondere an einem Kraftfahrzeug, mit einer langgestreckten elastischen Ersatz-Wischleiste (1) mit zwei Federschienen (6), die gegenüberliegend jeweils in eine seitliche, in den Kopfteil (2) der Wischleiste (1) eingearbeitete Längsnut (5) eingelegt und von einer, vorzugsweise nahe dem vorderen Ende (11) der Wischleiste (1), mit leichtem Preßsitz den Kopfteil (2) einschließlich Federschienen (6) umgreifenden Halteklammer (12) in den Längsnuten (5) gehalten werden, und mit jeweils einer seitlich in den Kopfteil (2) eingearbeiteten und parallel zur Längsnut (5) verlaufenden Führungsnut (16) zur Aufnahme der Krallen (7) eines Wischblattgestells (8), wobei auf einem Ende (9) der Wischleiste (1) ein Endstück (10') befestigt ist, dessen freier Querschnitt so gestaltet ist, daß es den Kopfteil (2) der Wischleiste (1) einschlleßlich Federschienen (5) aufnehmen kann, und das an diesem Ende (9) die Federschienen (6) in den Längsnuten (5) hält und nach der Montage die Wischleiste (1) in Längsrichtung am Wischblattgestell sichert, dadurch gekennzeichnet, daß das Endstück (10') an dem Ende (9) ausschließlich an der mit Federschienen (6) bestückten Wischleiste (1) gehalten ist, daß zu dem Austauschsatz ein identisches zweites Endstück (10') gehört, daß das zweite Endstück (10') nach dem vollständigen Einschieben der Wischleiste (1) in die Krallen (7) des Wischblattgestells (8) und gegebenenfalls nach dem Entfernen des Einführungsstückes (13) auf dem vorderen Ende (11) der Wischleiste (1) zu befestigen ist, so daß zwischen den Endstücken (10') und den benachbarten Krallen (7) des Wischblattgestells (8) das für die erforderliche Längsverschiebung der Wischleiste (1) gegenüber dem Wischblattgestell (8) benötigte Längsspiel gewährleistet ist.

3. Austauschsatz nach Anspruch 2, dadurch gekennzeichnet, daß das Endstück (10') mit einem Dämpfungsglied (32) für den Anschlag an die benachbarte Kralle (7) des Wischblattgestells (8) ausgestattet ist.

4. Austauschsatz nach Anspruch 3, dadurch gekennzeichnet, daß das Dämpfungsglied (32) eine Federzunge (34), insbesondere in Form eines in sich geschlossenen Hohlprofils, ist, welche einstückig und insbesondere stirnseitig am offenen Ende des Gehäuses (20') an das Endstück (10') angeformt ist.

5. Austauschsatz nach einem der vorhergehenden Ansprüche, dadurch gekennzeichnet, daß die Halteklammer (12) ähnlich einer Wäscheklammer ausgebildet ist und zwei Schenkel (17) besitzt, die im Bereich zwischen ihren beiden Enden durch einen Steg (18) miteinander verbunden sind, daß die Schenkel (17) an einem Ende als Haltestege (19) nach einwärts zueinander umgebogen sind, daß die Schenkel (17), der Steg (18) und die Haltestege (19) annähernd einen Raum abgrenzen, der dem Querschnitt des Kopfteiles (2) der Wischleiste (1) angepaßt ist, und daß die Haltestege (19) den Kopfteil (2) der Wischleiste (1) untergreifen.

6. Austauschsatz nach einem der vorhergehenden Ansprüche, dadurch gekennzeichnet, daß die Halteklammer (12) einstückig hergestellt ist und daß wenigstens der Steg (18) der Halteklammer (12) elastisch federnd ausgebildet ist.

7. Austauschsatz nach einem der vorhergehenden Ansprüche, dadurch gekennzeichnet, daß das vordere Ende (11) der Wischleiste (1) im wesentlichen stirnseitig mit einem Einführungsstück (13) bestückt ist, in welchem sich das für die Einführung der Wischleiste (1) in die Krallen (7) des Wischblattgestells (8) maßgebliche Profil der Wischleiste zum freien Ende hin verjüngt.

8. Austauschsatz nach Anspruch 7, dadurch gekennzeichnet, daß das Einführungsstück (13), insbesondere nach dem Einschieben der Wischleiste (1) in das Wischblattgestell (8), zerstörungsfrei vom Ende (11) der Wischleiste (1) entfernbar ist.

9. Austauschsatz nach einem der vorhergehenden Ansprüche, dadurch gekennzeichnet, daß das Gehäuse (20, 20') des Endstückes (10, 10') an einem Ende offen und am anderen Ende durch eine Rückwand (21) verschlossen ist, daß in die Unterseite (22) des Gehäuses (20,20') ein Schlitz (23) für die Aufnahme des Kippsteges (4) der Wischleiste (1) eingebracht ist und daß das Gehäuse (20, 20') mit Mitteln zum Arretieren an der Wischleiste (1), insbesondere mit Klemm- oder Rastelementen (25) an den gegenüberliegenden Innenseiten (24) des Gehäuses (20, 20') ausgestattet ist.

10. Austauschsatz nach Anspruch 9, dadurch gekennzeichnet, daß an das Endstück (10, 10') an der Unterseite (22) seines Gehäuses (20) zwischen dem Schlitz (23) und der Rückwand (21) eine Öffnung (26) besitzt, wobei der Schlitz (23) vorzugsweise in die Öffnung (26) einmündet.

11. Austauschsatz nach einem der vorhergehenden Ansprüche, dadurch gekennzeichnet, daß die auch nach der Montage der Wischleiste (1) am Wischblattgestell (8) an der Wischleiste (1) verbleibenden Endstücke (10, 10') die gleiche Farbe haben wie die Wischleiste (1) und/oder das Wischblattgestell (8) und daß die während der Montage von der Wischleiste (1) zu entfernenden Halteklammer (12) und Einführungsstück (13) in Bezug auf die Wischleiste (1) eine Kontrast- bzw. Signalfarbe haben, vorzugsweise Gelb oder Rot.

## Claims

1. Replacement assembly for a wiper blade for cleaning of a windshield, particularly of a motor vehicle, which comprises an elongated elastic replacement wiper blade assembly (1), having two elastic rails (6) that are inserted into a lateral longitudinal groove (5) in the top part (2) and held in the longitudinal grooves (5) by a retaining clip (12), that in particular surrounds in the vicinity of the forward end (11) of the wiper blade (1) with a slight press fit the top part (2) including the elastic rails (6), and with a guide groove (16) that serves for accommodating the claws (7) of a wiper blade frame (8), which is respectively arranged laterally in the top part (2) and extend parallel to the longitudinal grooves (5), wherein an end piece (10) is fixed on one end (9) of the wiper blade (1), which free cross section is designed such that it holds the top part (2) of the wiper blade (1) including the elastic rails (6) and that it holds the elastic rails (6) in the longitudinal grooves (5) on this end (9) and that it consists essentially of a hollow housing (20) and that the housing (20) is equipped with securing means for fixing indirectly the wiper blade (1) at the outer bracket of the wiper blade assembly in its longitudinal direction,characterized in that the securing means comprises two catch springs (15) that extend in the longitudinal direction of the wiper blade assembly (1) from the opposing side walls of the housing (20) beyond the open end of the housing (20), that catch tabs (14) are situated on the free ends of the catch springs (15) which are directed inward, which engage behind the outside of the end claw (7) after the wiper blade assembly (1) is mounted to the wiper blade frame (8).

2. Replacement assembly for a wiper blade for cleaning of a windshield, particularly of a motor vehicle, which comprises an elongated elastic replacement wiper blade assembly (1), having two elastic rails (6) that are inserted into a lateral longitudinal groove (5) in the top part (2) and held in the longitudinal grooves (5) by a retaining clip (12), that in particular surrounds in the vicinity of the forward end (11) of the wiper blade (1) with a slight press fit the top part (2) including the elastic rails (6), and with a guide groove (16) that serves for accommodating the claws (7) of a wiper blade frame (8), which is respectively arranged laterally in the top part (2) and extend parallel to the longitudinal grooves (5), wherein an end piece (10) is fixed on one end (9) of the wiper blade (1), which free cross section is designed such that it holds the top part (2) of the wiper blade (1) including the elastic rails (6) and that it holds the elastic rails (6) in the longitudinal grooves (5) on this end (9) and secures the wiper blade (1) in longitudinal direction at the wiper blade assembly after the mounting, characterized in that the end piece (10) is only held on the end (9) of the wiper blade assembly (1) which is equipped with the elastic rails (6), that the replacement assembly comprises a second, identical end piece (10'), and that, after complete insertion of the wiper blade assembly (1) into the claws (7) of the wiper blade frame (8) and, if so required, after removal of the insertion piece (13), the second end piece (10') is mounted onto the front end (11) of the wiper blade assembly (1) such that the longitudinal play between the end pieces (10') and the adjacent claws (7) of the wiper blade frame (8) required for the longitudinal displacement of the wiper blade assembly (1) relative to the wiper blade frame (8) is ensured.

3. Replacement assembly according to claim 2, characterized by the fact that the end piece (10') is equipped with a damping element (32) for contacting the adjacent claw (7) of the wiper blade frame (8).

4. Replacement assembly according to claim 3, characterized by the fact that the damping element (32) is an elastic tab (34), particularly, a closed hollow profile that is realized in one piece and integrally formed onto the end piece (10') on the open end of the housing (20'), particularly, its end surface.

5. Replacement assembly according to one of the previous claims, characterized by the fact that the retaining clip (12) is realized similarly to a clothespin and comprises two legs (17) that are connected to one another via a crosspiece (18) within the region between their two ends, that the legs (17) are bent inward on one end in the form of holding tabs (19), that the legs (17), the crosspiece (18), and the holding tabs (19) define the space that approximately corresponds to the cross section of the top part (2) of the wiper blade assembly (1), and that the holding tabs (19) engage beneath the top part (2) of the wiper blade assembly (1).

6. Replacement assembly according to one of the previous claims, characterized by the fact that the retaining clip (12) is realized in one piece, and that at least the crosspiece (18) of the retaining clip (12) is elastic.

7. Replacement assembly according to one of the previous claims, characterized by the fact that the front end (11) of the wiper blade assembly (1) is equipped with an insertion piece (13) that is essentially arranged on its end surface, with the profile of the wiper blade assembly that is determinative for the insertion of the wiper blade assembly (1) into the claws (7) of the wiper blade frame (8) tapered toward the free end in the aforementioned insertion piece.

8. Replacement assembly according to claim 7, characterized by the fact that the that the insertion piece (13) can be removed from the end (11) of the wiper blade assembly (1) without being destroyed, particularly after insertion of the wiper blade assembly (1) into the wiper blade frame (8).

9. Replacement assembly according to one of the previous claims, characterized by the fact that the housing (20, 20') of the end piece (10, 10') is open on one end and closed by a rear wall (21) on the other end, that a slot (23) for accommodating the tiltable ridge (4) is arranged on the underside (22) of the housing (20, 20'), and that the housing (20, 20') is equipped with means for fixing the housing on the wiper blade assembly (1), particularly clamping or catch elements (25) that are arranged on opposing inner sides (24) of the housing (20, 20').

10. Replacement assembly according to Claim 9, characterized by the fact that the underside (22) of the housing (20) of the end piece (10, 10') is provided with an opening (26) between the slot (23) and the rear wall (21), with the slot (23) preferably terminating in the opening (26).

11. Replacement assembly according to one of the previous claims, characterized by the fact that the end pieces (10, 10') which remain on the wiper blade assembly (1) after the wiper blade assembly (1) is mounted to the wiper blade frame (8) are of the same colour as the wiper blade assembly (1) and/or the wiper blade frame (8), and that the retaining clip (12) and the insertion piece (13) which must be removed during the mounting of the wiper blade assembly (1) are of a different colour than the wiper blade assembly (1), preferably yellow or red.

## Revendications

1. Jeu de rechange pour un balai d'essuie-glace afin de nettoyer une vitre, en particulier sur un véhicule automobile, comprenant une latte d'essuie-glace de rechange élastique allongée (1) avec deux lames élastiques (6), qui sont insérées l'un en regard de l'autre, respectivement, dans une rainure longitudinale latérale (5) ménagée dans la partie de tête (2) de la latte d'essuie-glace (1) et sont retenues dans les rainures longitudinales (5) par une pince (12) entourant, de préférence à proximité de l'extrémité avant (11) de la latte d'essuie-glace (1), avec un ajustage serré léger, la partie de tête (2) y compris les lames élastiques (6), et, respectivement, une rainure de guidage (16) ménagée latéralement dans la partie de tête (2) et s'étendant parallèlement à la rainure longitudinale (5) pour recevoir les griffes (7) d'un châssis de balai d'essuie-glace (8), de sorte que, sur une extrémité (9) de la latte d'essuie-glace (1) soit fixée une pièce d'extrémité (10), dont la section transversale libre est conformée de manière qu'elle puisse recevoir la partie de tête (2) de la latte d'essuie-glace (1) y compris les lames élastiques (6), et qui retient à cette extrémité (9) les lames élastiques (6) dans les rainures longitudinales (5) et est constituée sensiblement d'un boîtier (20) en forme de corps creux, qui est équipé de moyens de blocage, qui permettent de fixer la latte d'essuie-glace (1) directement sur l'étrier à griffes externe du châssis du balai d'essuie-glace dans sa direction longitudinale, caractérisé en ce que les moyens de blocage sont deux ressorts d'arrêt (15), qui s'étendent depuis les parois latérales en regard du boîtier (20) sur l'extrémité ouverte du boîtier (20) dans la direction longitudinale de la latte d'essuie-glace (1), en prévoyant aux extrémités libres des ressorts d'arrêt (15) des ressauts d'arrêt (14) dirigés vers l'intérieur, qui accrochent, après le montage de la latte d'essuie-glace (1) sur le châssis (8) du balai d'essuie-glace, la griffe d'extrémité (7) sur les côtés extérieurs.

2. Jeu de rechange pour un balai d'essuie-glace pour nettoyer une vitre, en particulier sur un véhicule automobile, comprenant une latte d'essuie-glace de rechange élastique allongé (1) avec deux lames élastiques (6), qui sont insérées l'une en regard de l'autre, respectivement, dans une rainure longitudinale latérale (5) ménagée dans la partie de tête (2) de la latte d'essuie-glace (1) et qui sont retenues dans les rainures longitudinales (5) par une pince de retenue (12), de préférence au voisinage de l'extrémité avant (11) de la latte d'essuie-glace (1), entourant avec un ajustage serré léger la partie de tête (2) y compris les lames élastiques (6), et une rainure de guidage (16) ménagée respectivement latéralement dans la partie de tête (2) et s'étendant parallèlement à la rainure longitudinale (5) pour recevoir les griffes (7) d'un châssis (8) du balai d'essuie-glace, de telle sorte qu'à une extrémité (9) de la latte d'essuie-glace (1) soit fixée une pièce d'extrémité (10') dont la section transversale libre est conformée de telle sorte qu'elle puisse recevoir la partie de tête (2) de la latte d'essuie-glace (1) y compris les lames élastiques (5), et qui retient à cette extrémité (9) les lames élastiques (6) dans les rainures longitudinales (5) et les bloque, après le montage de la latte d'essuie-glace (1), dans la direction longitudinale sur le châssis du balai d'essuie-glace, caractérisé en ce que la pièce d'extrémité (10') est retenue sur l'extrémité (9) à l'exclusion de la latte d'essuie-glace (1) équipée des lames élastiques (6), une seconde pièce d'extrémité identique (10') fait partie du jeu de rechange, la seconde pièce d'extrémité (10') est fixée, après l'insertion complète de la latte (1) dans les griffes (7) du châssis (8) du balai d'essuie-glace et éventuellement après le retrait de la pièce de guidage (13) sur l'extrémité avant (11) de la latte d'essuie-glace (1) de telle sorte qu'entre les pièces d'extrémité (10') et les griffes voisines (7) du châssis (8) du balai d'essuie-glace, on garantisse le jeu longitudinal nécessaire pour le déplacement longitudinal requis de la latte d'essuie-glace (1) par rapport au châssis (8) du balai d'essuie-glace.

3. Jeu de rechange selon la revendication 2, caractérisé en ce que la pièce d'extrémité (10') est équipée d'un élément d'amortissement (32) de choc sur la griffe voisine (7) du châssis (8) du balai d'essuie-glace.

4. Jeu de rechange selon la revendication 3, caractérisé en ce que l'élément d'amortissement (32) est une languette élastique (34), en particulier sous la forme d'un profilé creux refermé sur lui-même, qui est formé d'une seule pièce, en particulier sur le côté avant sur l'extrémité ouverte du boîtier (20') sur la pièce d'extrémité (10').

5. Jeu de rechange selon l'une quelconque des revendications précédentes, caractérisé en ce que la pince de retenue (12) a une forme similaire à celle d'une pince à linge et possède deux ailes (17), qui sont reliées l'une à l'autre dans la zone comprise entre leurs deux extrémités par une nervure (18) les ailes (17) à une extrémité sont repliées vers l'intérieur l'une de l'autre sous la forme de nervures de retenue (19), les ailes (17), la nervure (18) et les nervures de retenue (19) délimitent approximativement un espace qui est ajusté sur la section transversale de la partie de tête (2) de la latte d'essuie-glace (1), et les nervures de retenue (19) s'engagent sur la partie de tête (2) de la latte d'essuie-glace (1).

6. Jeu de rechange selon l'une quelconque des revendications précédentes, caractérisé en ce que la pince de retenue (12) est fabriquée en une seule pièce et au moins la nervure (18) de la pince de retenue (12) est conformée de manière élastique.

7. Jeu de rechange selon l'une quelconque des revendications précédentes, caractérisé en ce que l'extrémité avant (11) de la latte d'essuieglace (1) est équipée dans une disposition sensiblement à l'avant, d'une pièce d'insertion (13) dans laquelle le profil de la latte d'essuie-glace destiné à l'insertion de la latte d'essuie-glace (1) dans les griffes (7) du châssis (8) du balai d'essuie-glace se rétrécit vers l'extrémité libre.

8. Jeu de rechange selon la revendication 7, caractérisé en ce que la pièce d'insertion (13) peut être retirée, en particulier après l'insertion de la latte d'essuie-glace (1) dans le châssis (8) du balai d'essuie-glace, sans endommagement, de l'extrémité (11) de la latte d'essuie-glace (1).

9. Jeu de rechange selon l'une quelconque des revendications précédentes, caractérisé en ce que le boîtier (20, 20') de la pièce d'extrémité (10, 10') est ouvert à une extrémité et fermé à l'autre extrémité par une paroi arrière (21), que dans la partie inférieure (22) du boîtier (20, 20') est ménagée un fente (23) pour recevoir la nervure pivotante (4) de la latte d'essuie-glace (1) et que le boîtier (20, 20') est équipé de moyens de blocage sur la latte d'essuie-glace (1), en particulier d'éléments de blocage ou d'arrêt (25) sur les côtés internes se faisant face (24) du boîtier (20, 20').

10. Jeu de rechange selon la revendication 9, caractérisé en ce que la pièce d'extrémité (10, 10') possède, sur la partie inférieure (22) de son boîtier (20), entre la fente (23) et la paroi arrière (21), une ouverture (26), la fente (23) débouchant de préférence dans l'ouverture (26).

11. Jeu de rechange selon l'une quelconque des revendications précédentes, caractérisé en ce que les pièces d'extrémité (10, 10') restant, après le montage de la latte d'essuie-glace (1) sur le châssis (8) du balai d'essuie-glace, sur la latte d'essuie-glace (1) ont la même couleur que la latte d'essuie-glace (1) et/ou le châssis (8) du balai d'essuie-glace et la pièce de retenue (12) et la pièce d'insertion (13) qui doivent être retirées de la latte d'essuie-glace (1) au cours du montage ont par rapport à la latte d'essuie-glace (1) une couleur contrastée ou couleur de signalisation, de préférence jaune ou rouge.
